# FASCICULE DE BREVET EUROPEEN

(11) **EP 2 074 893 B1**
(45) Date de publication et mention de la délivrance du brevet: **12.01.2011**
(21) Numéro de dépôt: 08169530.6
(22) Date de dépôt: 20.11.2008
(51) Int. Cl.: A23L 2/58, A23L 2/38, A23L 2/60

(54) **Boisson énergisante fluorescente à base de caféine.**
Fluoreszierendes Energiegetränk auf Koffeinbasis
Fluorescent, caffeine-based energy drink

(30) Priorité: 23.11.2007 FR 0708204
(43) Date de publication de la demande: 01.07.2009
(73) Titulaire: Virenque, Richard, 83320 Carqueiranne (FR)
(72) Inventeur: Virenque, Richard, 83320 Carqueiranne (FR)
(74) Mandataire: Roman, Alexis

(56) Documents cités:
- WO-A-03/099039
- WO-A-2005/009147
- GB-A- 2 123 672
- JP-A- 2001 231 494
- US-A1- 2004 121 050
- US-A1- 2004 253 350
- "Blue liquid Spirulina beverage" DERWENT, 31 juillet 1996 (1996-07-31), XP002250818 & CN 1 127 611 A (GUANGDONG MARINE ORGANISMS FOO [CN]) 31 juillet 1996 (1996-07-31)
- DATABASE WPI Week 200507 Thomson Scientific, London, GB; AN 2005-058388 XP002488852 & CN 1 531 876 A (ZHOU L) 29 septembre 2004 (2004-09-29)

## Description

### Domaine technique de l'invention.

L'invention a pour objet une boisson énergisante fluorescente à base de caféine.

Elle concerne le domaine technique des boissons énergisantes prêtes à l'emploi, consommables directement et/ou pouvant être diluées dans une autre boisson avec ou sans alcool.

L'invention concerne plus particulièrement les boissons énergisantes ayant un aspect visuel particulièrement attractif pour le consommateur.

### État de la technique.

Les boissons énergisantes sont bien connues de l'art antérieur. Les ingrédients actifs principaux sont le plus souvent de la caféine, utilisée seule ou en combinaison avec d'autres ingrédients tels que le Guarana ou la taurine (par exemple Red Bull®).

La caféine est l'ingrédient le plus efficace, car elle renverse temporairement plusieurs des effets cognitifs nuisibles résultant du manque de sommeil. Elle tend également à améliorer la mémoire, la concentration et les performances sportives. De manière générale, la teneur en caféine de ces boissons énergisantes ne dépasse pas 15 mg/100 mL.

Pour compenser l'amertume due à la forte teneur en caféine, ces boissons énergisantes contiennent généralement beaucoup de sucre. Il en résulte que les boissons connues de l'art antérieur sont riches en glucides (> 10 g/100 mL) et très caloriques (> 50 kcal/100 mL).

De plus, l'aspect visuel d'une boisson a indéniablement une forte influence sur l'attraction qu'elle peut exercer sur le consommateur. Or, on peut constater qu'à ce jour, il est difficile de distinguer la provenance des boissons énergisantes une fois qu'elles sont versées dans un verre. Seul leur emballage (canette, bouteille, ...) permet au consommateur de connaître la marque de la boisson consommée.

Face à cet état des choses, le problème technique principal que vise à résoudre l'invention est de proposer une nouvelle boisson énergisante facilement reconnaissable indépendamment de son emballage, ladite boisson ayant une forte concentration de caféine.

Un autre objectif de l'invention est de proposer une boisson énergisante riche en caféine mais pauvre en glucides et en calories, et dont la saveur est douce et non amère.

### Divulgation de l'invention.

La solution proposée par l'invention est une boisson énergisante à base de caféine, comportant :
- entre 32 mg/100 mL et 45 mg/100 mL de caféine,
- un agent colorant donnant à ladite boisson une couleur fluorescente lorsqu'elle est exposée à de la lumière ultra-violette.

Le fait d'utiliser un agent colorant fluorescent réagissant à la lumière ultra-violette procure un effet particulièrement attractif et ludique pour le consommateur. En effet, cela lui permet, dans des lieux équipés de lumière ultra-violette (typiquement dans les bars, clubs ou autres boites de nuit), d'obtenir une boisson fluorescente qui se distinguera des autres boissons habituellement consommées. Il est ainsi aisé de reconnaître la boisson objet de l'invention lorsqu'elle est versée dans un verre, indépendamment de son emballage.

Selon une caractéristique avantageuse de l'invention, la boisson comportera entre 30 mg/100 mL et 60 mg/100 mL d'un mélange de cyclamate de sodium, de saccharinate de sodium et d'acésulfame de potassium pour neutraliser la saveur amère due à la teneur élevée en caféine.

Ce mélange d'édulcorants permet d'inhiber l'amertume due à la très forte teneur en caféine, tout en permettant d'obtenir une boisson énergisante ayant un goût agréable, mais pauvre en glucides et en calories.

Les documents suivants illustrent l'arrière plan technologique de l'invention : US 2004/121050 (Thurman Tracy), US 2004/253350 (Glassberg), WO 03/099039 (Anglia Polytechnic University), CN 1.127.611 (Guangdong Marine Organisms Foo), CN 1.531.876 (Zhou), JP 2001.231494 (Kikkoman Corp), WO 2005/009147 (Hartingan),

D'autres avantages et caractéristiques de l'invention apparaîtront mieux à la lecture de la description des modes de réalisation préférés qui vont suivre.

### Modes de réalisation de l'invention.

La boisson énergisante objet de l'invention est une boisson prête à l'emploi, destinée à être stockée dans un contenant du type canette, bouteille ou autre. Le format du contenant peut être variable: 75 mL, 125 mL, 252 mL, 500 mL, etc.

De par les composants utilisés, cette boisson peut être consommée directement sans risque pour la santé, sauf pour les personnes sensibles à la caféine. Compte tenu de sa très forte teneur en caféine, la boisson objet de l'invention doit être bue en quantité limitée, avantageusement pas plus de 500 mL par jour. La boisson objet de l'invention peut également être diluée dans une autre boisson avec ou sans alcool, par exemple pour la réalisation de cocktails.

L'ingrédient actif principal utilisé est la caféine. Conformément à l'invention, la teneur en caféine est comprise entre 32 mg/100 mL et 45 mg/100 mL, ce qui est largement supérieur aux teneurs habituellement utilisées dans les boissons énergisantes connues de l'art antérieur. On utilisera préférentiellement une teneur en caféine d'environ 32 mg/100 mL.

Outre la caféine, la boisson objet de l'invention pourra comporter d'autres agents actifs complémentaires pris seuls ou en combinaison et choisis dans la liste suivante : Guarana, taurine, différentes formes de ginseng, maltodextrine, inositol, carnitine, glucuronolactone, ginkgo biloba, quinine. Ces agents actifs complémentaires seront dosés entre 0.01 g/mL et 5 g/mL. Concernant la quinine, on utilisera un dosage compris entre 60 ppm et 100 ppm.

Selon un autre aspect de l'invention, la boisson contient un agent lui donnant une couleur fluorescente lorsqu'elle est exposée à de la lumière ultra-violette. Un tel agent absorbe la lumière ultra-violette et la rediffuse sous forme de lumière visible colorée.

L'agent colorant fluorescent utilisé est non nocif pour l'homme et compatible avec des préparations alimentaires. Pour simplifier l'élaboration de la boisson et limiter les apports calorifiques et/ou glucidique, on utilise préférentiellement de la riboflavine associée au colorant alimentaire Bleu Brillant E133.

Pour avoir un effet visuel optimal, on utilise avantageusement le dosage suivant : entre 3 mg/100 mL et 5 mg/100 mL de riboflavine et entre 0.01 mg/100 mL et 0.5 mg/100 mL de colorant alimentaire Bleu Brillant E133.

On pourra toutefois employer d'autres agents fluorescents équivalents convenant à l'homme du métier tel que la quinine, la luciférase, la luciférine, ou encore des phycobiliprotéines, associés à des colorants donnant à la boisson une couleur souhaitée : bleu, rouge, jaune, etc.

Le demandeur a constaté de manière surprenante qu'un mélange de cyclamate de sodium, de saccharinate de sodium et d'acésulfame de potassium, dosé entre 30 mg/100 mL et 60 mg/100 mL, permettait de neutraliser la saveur amère due à la très forte teneur en caféine. La boisson objet de l'invention a ainsi une saveur neutre, voire légèrement sucrée, permettant de l'aromatiser par la suite, sans dénaturation des arômes utilisés.

Ce mélange d'édulcorants permet en outre d'obtenir une boisson énergisante ayant une teneur en glucide inférieure à 0,5 g/100 mL (de l'ordre de 0,1 g/100 mL dont 0,01 g/100 mL de sucre) et apportant moins de 3 kcal/100 mL.

La saveur amère de la boisson est particulièrement atténuée lorsque l'on dose les édulcorants dans les proportions suivantes :
- entre 20 mg/100 mL et 35 mg/100 mL, préférentiellement 28 mg/100 mL, de cyclamate de sodium,
- entre 5 mg/100 mL et 8 mg/100 mL, préférentiellement 6,7 mg/100 mL, de saccharinate de sodium,
- entre 5 mg/100 mL et 8 mg/100 mL, préférentiellement 6,6 mg/100 mL, d'acésulfame de potassium.

La boisson objet de l'invention peut comporter en outre :
- entre 0,4 g/100 mL et 0.6 g/100 mL d'acide citrique (acidifiant),
- entre 0.05 g/100 mL et 0.2 g/100 mL d'extrait de Guarana en poudre,
- entre 0.05 g/100 mL et 0.2 g/100 mL de citrate de sodium (régulateur d'acidité),
- entre 50 mg/100 mL et 70 mg/100 mL d'arôme (banane, pomme, fraise, etc),
- entre 40 mg/100 mL et 60 mg/100 mL d'ascorbate de sodium (antioxydant),
- entre 30 mg/100 mL et 50 mg/100 mL de sorbate de potassium (conservateur).

Une boisson conforme à l'invention est préférentiellement obtenue en mélangeant de manière conventionnelle les composants suivants :

| Composants | Dosage pour 100 mL |
|---|---|
| caféine | 35 mg |
| cyclamate de sodium | 28 mg |
| acésulfame de potassium | 6,6 mg |
| saccharinate de sodium | 6,7 mg |
| riboflavine | 4.1 mg |
| Bleu Brillant E133 | 0.03 mg |
| acide citrique | 0,49 g |
| extrait de Guarana en poudre | 0,10 g |
| citrate de sodium | 0,10 g |
| arôme | 64 mg |
| ascorbate de sodium | 64 mg |
| sorbate de potassium | 40 mg |
| eau | Compléter jusqu'à 100 mL |

Pour cette boisson, on obtient l'analyse moyenne suivante :

| Analyse moyenne | | Pour 100 mL |
|---|---|---|
| Valeur énergétique | | 10 kJ-2,3 kcal |
| Protéines | | 0 g |
| Glucides | | 0,1 g |
| | dont sucre | 0,01 g |
| Lipides | | 0 g |
| | dont a.g saturés | 0 g |
| Fibres | | 0 g |
| Sodium | | 0,03 g |

## Revendications

1. Boisson énergisante à base de caféine, **se caractérisant par le fait qu'**elle comporte :
- entre 32 mg/100 mL et 45 mg/100 mL de caféine,
- un agent colorant donnant à ladite boisson une couleur fluorescente lorsqu'elle est exposée à de la lumière ultra-violette.

2. Boisson selon la revendication 1, comportant entre 30 mg/100 mL et 60 mg/100 mL d'un mélange de cyclamate de sodium, de saccharinate de sodium et d'acésulfame de potassium pour neutraliser la saveur amère due à la teneur élevée en caféine.

3. Boisson selon la revendication 2, comportant :
- entre 20 mg/100 mL et 35 mg/100 mL de cyclamate de sodium,
- entre 5 mg/100 mL et 8 mg/100 mL de saccharinate de sodium,
- entre 5 mg/100 mL et 8 mg/100 mL d'acésulfame de potassium.

4. Boisson selon l'une des revendications précédentes, dans laquelle l'agent colorant fluorescent est de la riboflavine associée au colorant alimentaire Bleu Brillant E133.

5. Boisson selon l'une des revendications 1 à 3, dans laquelle l'agent colorant fluorescent est de la quinine dosée entre 60 ppm et 100 ppm.

6. Boisson selon la revendication 4, comportant entre 3 mg/100 mL et 5 mg/100 mL de riboflavine et entre 0.01 mg/100 mL et 0.5 mg/100 mL de colorant alimentaire Bleu Brillant E133.

7. Boisson selon l'une des revendications précédentes, comportant en outre :
- entre 0,4 g/100 mL et 0.6 g/100 mL d'acide citrique,
- entre 0.05 g/100 mL et 0.2 g/100 mL d'extrait de Guarana en poudre,
- entre 0.05 g/100 mL et 0.2 g/100 mL de citrate de sodium,
- entre 50 mg/100 mL et 70 mg/100 mL d'arôme,
- entre 40 mg/100 mL et 60 mg/100 mL d'ascorbate de sodium,
- entre 30 mg/100 mL et 50 mg/100 mL de sorbate de potassium.

8. Boisson selon l'une des revendications précédentes, comportant en plus de la caféine, d'autres agents actifs complémentaires pris seuls ou en combinaison et choisis dans la liste suivante : Guarana, taurine, différentes formes de ginseng, maltodextrine, inositol, carnitine, glucuronolactone, ginkgo biloba, quinine.

## Claims

1. Energy drink containing caffeine, **characterised in that** it contains:
- between 32 mg/100 ml and 45 mg/100 ml of caffeine,
- a colouring agent giving to the aforementioned drink a fluorescent colour when exposed to ultraviolet light.

2. Drink according to claim 1, containing between 30 mg/100 ml and 60 mg/100 ml of a mixture of sodium cyclamate, sodium saccharinate and acesulfame potassium to neutralize the bitter taste due to the high caffeine content.

3. Drink according to claim 2, containing:
- between 20 mg/100 ml and 35 mg/100 ml of sodium cyclamate,
- between 5 mg/100 ml and 8 mg/100 ml of sodium saccharinate,
- between 5 mg/100 ml and 8 mg/100 ml of acesulfame potassium.

4. Drink according to one of the above claims, in which the fluorescent colouring is riboflavin associated with the food colouring agent Brilliant Blue E133.

5. Drink according to one of claims 1 to 3, in which the fluorescent colouring agent is quinine in a dose of between 60 ppm and 100 ppm.

6. Drink according to claim 4, containing between 3 mg/100 ml and 5 mg/100 ml of riboflavin and between 0.01 mg/100 ml and 0.5 mg/100 ml of the colouring agent Brilliant Blue E133.

7. Drink according to one of the above claims, also containing:
- between 0.4 g/100 ml and 0.6 g/100 ml of citric acid,
- between 0.05 g/100 ml and 0.2 g/100 ml of powdered Guarana extract,
- between 0.05 g/100 ml and 0.2 g/100 ml of sodium citrate,
- between 50 mg/100 ml and 70 mg/100 ml of flavour,
- between 40 mg/100 ml and 60 mg/100 ml of sodium ascorbate,
- between 30 mg/100 ml and 50 mg/100 ml of potassium sorbate.

8. Drink according to one of the above claims containing, in addition to the caffeine, other supplementary active agents taken alone or in combination and chosen from the following list: Guarana, taurine, various forms of ginseng, maltodextrin, inositol, carnitine, glucuronolactone, ginkgo biloba, quinine.

## Patentansprüche

1. Koffeinhaltiges Energiegetränk, **gekennzeichnet durch** folgende Inhaltsstoffe:
- 32 mg/100ml bis 45 mg/100ml Koffein,
- einen Farbstoff, der dem Getränk eine fluoreszierende Farbe verleiht, wenn es ultraviolettem Licht ausgesetzt ist.

2. Getränk gemäß Patentanspruch 1 mit einer Mischung aus Natriumcyclamat, Natriumsaccharinat, Acesulfam-K in einem Anteil von 30 mg/100 ml bis 60 mg/100 ml, um den bitteren Geschmack aufgrund des hohen Koffeingehalts zu neutralisieren.

3. Getränk gemäß Anspruch 2, mit:
- 20 mg/100ml bis 35 mg/100ml Natriumcyclamat,
- 5 mg/100ml bis 8 mg/100ml Natriumsaccharinat,
- 5 mg/100ml bis 8 mg/100ml Acesulfam-K.

4. Getränk gesäß einem der vorstehenden Patentansprüche, in dem als fluoreszierender Farbstoff Riboflavin zusammen mit dem Lebensmittelfarbstoff Brillantblau E133 verwendet wird.

5. Getränk gemäß einem der Patentansprüche 1 bis 3, in dem als fluoreszierender Farbstoff Chinin in einem Anteil von 60 ppm bis 100 ppm verwendet wird.

6. Getränk gemäß Patentanspruch 4 mit 3 mg/100 ml bis 5 mg/100 ml Riboflavin und 0,01 mg/100 ml bis 0,5 mg/100 ml des Lebensmittelfarbstoffs Brillantblau E133.

7. Getränk gemäß einem der vorstehenden Ansprüche und zusätzlich folgenden Inhaltsstoffen:
- 0.4 g/100ml bis 0.6 g/100ml Citrussäure,
- 0.05 g/100ml bis 0.2 g/100ml Guarana-Extrakt in Pulverform,
- 0.05 g/100ml bis 0.2 g/100ml Natriumcitrat,
- 50 mg/100ml bis 70 mg/100ml Aromastoffe,
- 40 mg/100ml bis 60 mg/100ml Natriumascorbat,
- 30 mg/100ml bis 50 mg/100ml Kaliumsorbat.

8. Getränk gemäß einem der vorstehenden Patenansprüche, das zum Koffein komplementäre aktive Bestandteile enthält, die in der nachstehenden Liste aufgeführt sind und einzeln oder kombiniert zugesetzt werden. Guaranä, Taurin, verschiedene Ginseng-Formen, Maltodextrin, Inosit, Carnitin, Glucuronolacton, Ginkgo biloba, Chinin.
